# EUROPEAN PATENT SPECIFICATION

(11) **EP 3 101 075 B1**
(45) Date of publication and mention of the grant of the patent: **10.10.2018**
(21) Application number: 15742669.3
(22) Date of filing: 26.01.2015
(51) Int. Cl.: C09D 183/06, B32B 27/00, G02B 1/10, G02B 1/11

(54) **COATING COMPOSITION AND OPTICAL MEMBER**
BESCHICHTUNGSZUSAMMENSETZUNG UND OPTISCHES ELEMENT
COMPOSITION DE REVÊTEMENT ET ÉLÉMENT OPTIQUE

(30) Priority: 30.01.2014 JP 2014015215
(43) Date of publication of application: 07.12.2016
(73) Proprietor: Nissan Chemical Corporation, Tokyo (JP)
(72) Inventor: FURUKAWA, Tomonori, Sodegaura-shi Chiba 299-0266 (JP); KOYAMA, Yoshinari, Sodegaura-shi Chiba 299-0266 (JP); ASADA, Motoko, Sodegaura-shi Chiba 299-0266 (JP)
(74) Representative: Hoffmann Eitle
(86) International application number: PCT/JP2015/052056
(87) International publication number: WO 2015/115377

(56) References cited:
- EP-A1- 1 077 236
- WO-A1-2011/090084
- JP-A- 2001 348 528
- JP-A- 2003 138 211
- JP-A- 2005 213 517
- JP-A- 2010 505 042
- US-A1- 2002 010 273
- US-A1- 2002 197 475

## Description

### TECHNICAL FIELD

The present invention relates to a coating composition and an optical member having excellent adhesion of a formed coating material to the substrate, in which weather resistance and light resistance of the coating material are not deteriorated even when the deposited film of an inorganic oxide (an anti-reflective coating and the like) is applied onto the coating material, and, in particular, discoloration caused by ultraviolet light is almost completely suppressed.

### BACKGROUND ART

Plastic mold products are frequently used because of the advantages of lightness in weight, easy processability, and impact resistance. The plastic mold products, however, are easily scratched due to insufficient hardness, easily damaged by a solvent, charged to adsorb dust, and have insufficient heat resistance. Consequently, the plastic molded products have practical disadvantages compared with inorganic glass molded products when the plastic molded products are used as spectacle lenses, window materials, or the like. Consequently, application of protective coating to the plastic mold products has been suggested. Various coating compositions to be used for the coating have been suggested.

As a coating composition providing a hard film close to an inorganic-based film, a coating composition including an organic silicon compound or a hydrolyzed compound thereof as a main component (a resin component or a coating film formation component) has been used as spectacle lenses (refer to Patent Document 1).

The coating composition described above still has insufficient scratch resistance and thus a composition obtained by further adding a silicon dioxide sol colloidally dispersed to the coating composition has been suggested. This composition has also been used as spectacle lenses (refer to Patent Document 2).

Conventional spectacle lenses made of plastics are mainly produced by cast polymerization of a monomer of diethylene glycol bis-allyl carbonate. These lenses, however, have a refractive index of about 1.50, which is lower than a refractive index of glass lenses of about 1.52. Therefore, the conventional plastic spectacle lenses have the disadvantage that the thickness of the lens edge becomes thicker in the case of lenses for myopia. Consequently, in recent years, a monomer having higher refractive index than that of diethylene glycol bis-allyl carbonate has been developed and a high-refractive index resin material has been suggested (refer to Patent Documents 3 and 4).

A method for using a colloidal dispersion of metal oxide fine particles of Sb and Ti as a coating material with respect to such a high-refractive index resin lens, has also been suggested (refer to Patent Documents 5 and 6).

A coating composition including a silane coupling agent, and a stable modified metal oxide sol containing particles (C) obtained by providing metal oxide colloidal particles (A) having a primary particle diameter of 2 nm to 60 nm as nucleuses and coating the surfaces of the colloidal particles (A) with a coating material (B) made of acidic oxide colloidal particles, containing the particles (C) in an amount of 2% by mass to 50% by mass in terms of the metal oxides, and having a primary particle diameter of 2 nm to 100 nm has also been described. Specific examples of the colloidal particles to be used include modified titanium oxide-zirconium oxide-tin oxide composite colloid coated with alkyl amine-containing antimony pentoxide have been described (refer to Patent Document 7).

EP 1 077 236 A1 relates to a stable modified metal oxide sol which contains from 2 to 50 wt%, as calculated as metal oxides, of particles (c) comprising colloidal particles (a) of a metal oxide having primary particle diameters of from 2 to 60 nm, as nuclei, and a coating material (b) consisting of colloidal particles of an acidic oxide coated on the surface of the particles (a), and which has primary particle diameters of from 2 to 100 nm.

US 2002/010273 A1 relates to a coating composition comprising (A) 100 parts by weight of an organosilicon compound having a hydrolyzable group-bearing silyl group, and (B) 0.1-50 parts by weight of a hydrolytic condensate of a reaction product and/or a mixture of a beta-diketone with a mixture (b-1) of a titanium tetraalkoxide and an alkoxide of Zr, Fe, Al, Zn, In, Cu, Si, Sn, W or Mg.

US 2002/197475 A1 relates to organosilicon nano/microhybrid systems or microhybrid systems having nanoscale and/or microscale oxide particles (KA-O), and an organosilicon shell with at least one organosilicon constituent of the general formula (Si'O-)ₓSi-R wherein the organosilicon constituent of the shell B is attached to the oxide particles via one or more covalent linkages of formula (KA-O)-[(Si'O-)ₓSi-R].

### Prior Art Documents

### Patent Documents

Patent Document 1: Japanese Patent Application Publication No. S52-11261 (JP S52-11261 A)
Patent Document 2: Japanese Patent Application Publication No. S53-111336 (JP S53-111336 A)
Patent Document 3: Japanese Patent Application Publication No. S55-13747 (JP S55-13747 A)
Patent Document 4: Japanese Patent Application Publication No. S64-54021 (JP S64-54021 A)
Patent Document 5: Japanese Patent Application Publication No. S62-151801 (JP S62-151801 A)
Patent Document 6: Japanese Patent Application Publication No. S63-275682 (JP S63-275682 A)
Patent Document 7: Japanese Patent Application Publication No. 2001-123115 (JP 2001-123115 A)

### SUMMARY OF THE INVENTION

### Problem to be Solved by the Invention

The coating composition containing the silicon dioxide sol, however, causes interference fringes to be generated on the coating film and thus has a problem of poor appearance of the lens. In the lens surface, an anti-reflective coating (made of a multi-layer structure film of inorganic oxide thin films based on optical interference theory) is often formed on the coating film. In this case, the anti-reflective coating emits reflection color of, for example, ultra-light green. Accordingly, a problem has occurred in which the reflection color varies depending on the position of the lens surface and this causes color irregularities.

The coating composition using the titanium oxide sol has a problem of compatibility of the titanium oxide sol with the silane coupling agent and the hydrolyzed compound thereof, and thus has disadvantages of poor stability, poor water resistance of the coating layer formed of the coating composition, and coloring in blue caused by light excitation of titanium oxide irradiated with ultraviolet light. The high-refractive index resin lens has poor adhesion to the coating composition, resulting in film peeling.

Consequently, improvement of adhesion using a silane having a ureido alkyl group in the coating composition is suggested. The coating composition, however, has a problem of reduction in the denseness of the film, which causes excessively high dyeing affinities.

Therefore, an object of the present invention is to provide, to a high-refractive index plastic molded product having n_{D} of 1.58 to 1.76, a coating composition that provides a coating film having excellent adhesion to a substrate and does not have interference fringes on the coating film, in which color irregularities of reflection light are not caused, discoloration due to ultraviolet irradiation is almost completely suppressed, and an optical member having a cured film formed of the coating composition.

Another object of the present invention is to provide a coating composition for a plastic molded product having excellent scratch resistance, surface hardness, abrasion resistance, flexibility, transparency, antistatic properties, dyeing affinities, heat resistance, water resistance, and chemical resistance and an optical member having a cured film formed of the coating composition.

### Means for Solving the Problem

As a first aspect of the present invention, a coating composition comprising:
an (S) component and a (T) component, wherein
the (S) component is at least one silicon-containing substance selected from the group consisting of organic silicon compounds of General Formula (I):

   (R¹)ₐ(R³)_{b}Si(OR²)_{4-(a+b)} (I)

   (where each of R¹ and R³ is a C₁₋₁₀ alkyl group, aryl group, halogenated alkyl group, halogenated aryl group, or alkenyl group, or an organic group having an epoxy group, an acryloyl group, a methacryloyl group, a mercapto group, a ureido group, an amino group, or a cyano group and is bonded to a silicon atom through a Si-C bond; each of R² is a C₁₋₈ alkyl group, alkoxyalkyl group, or acyl group; and each of a and b is an integer of 0, 1, or 2; and a + b is an integer of 0, 1, or 2); and General Formula (II):

   [(R⁴)_{c}Si(OX)_{3-c}]₂Y (II)

   (where R⁴ is a C₁₋₅ alkyl group, each X is a C₁₋₄ alkyl group or acyl group; Y is a methylene group or a C₂₋₂₀ alkylene group; and c is an integer of 0 or 1) and a hydrolyzed compound of the organic silicon compounds;
the (T) component is colloidal particles (D) formed by bonding an organic silicon compound having a ureido group to surfaces of modified metal oxide colloidal particles (C) having a primary particle diameter of 3 nm to 100 nm formed by providing metal oxide colloidal particles (A) having a primary particle diameter of 2 nm to 60 nm as nucleuses and partially or fully coating the surfaces of the colloidal particles (A) with a coating material (B) made of acidic oxide colloidal particles having a primary particle diameter of 1 nm to 4 nm;
the metal oxide colloidal particles (A) are at least one metal oxide selected from the group consisting of Ti, Fe, Cu, Zn, Y, Zr, Nb, Mo, In, Sn, Sb, Ta, W, Pb, Bi, and Ce; and the coating material (B) is colloidal particles of at least one metal oxide selected from the group consisting of Si, Sn, Mo, Sb, and W;
as a second aspect, the coating composition according to the first aspect, wherein the organic silicon compound having a ureido group bonded to the surfaces of the modified metal oxide colloidal particles (C) exists in an amount of 3% by mass to 30% by mass to the total metal oxide in the modified metal oxide colloidal particles (C);
as a third aspect, the coating composition according to the first aspect or the second aspect, further comprising at least one curing catalyst selected from the group consisting of a metal salt, a metal alkoxide, and a metal chelate compound;
as a fourth aspect, the coating composition according to any one of the first aspect to the third aspect, further comprising at least a thiol compound;
as a fifth aspect, an optical member comprising: a cured film formed of the coating composition as described in any one of the first aspect to the fourth aspect on a surface of an optical substrate; and
as an sixth aspect, an optical member according to the fifth aspect, further comprising: an anti-reflective coating further formed on the surface of the optical member.

The coating composition of the present invention can form a cured film having excellent scratch resistance, surface hardness, abrasion resistance, transparency, heat resistance, light resistance, and weather resistance and, in particular, can form a coating layer having excellent adhesion to a high-refractive index resin lens. The coating composition also has excellent adhesion to an anti-reflective coating (formed of an inorganic oxide or a fluoride), a metal evaporated film, or the like to be formed on the coating layer.

The optical member of the present invention has excellent scratch resistance, surface hardness, abrasion resistance, transparency, heat resistance, light resistance, weather resistance and, in particular, water resistance. The optical member has high transparency and good appearance without interference fringes even when the coating composition is applied to a member having a high refractive index of 1.58 or more.

The optical member having the cured film to be produced from the coating composition of the present invention can be used for a camera lens, automobile window glass, an optical filter attached to a liquid crystal display and a plasma display, and the like, in addition to the spectacle lenses.

### MODES FOR CARRYING OUT THE INVENTION

In General Formula (I):

(R¹)ₐ(R³)_{b}Si(OR²)_{4-(a+b)} (I)

representing an organic silicon compound in the (S) component to be used for the coating composition of the present invention, R¹ and R³ are the same organic group or different organic groups and a and b are the same integer or different integers.

Examples of the organic silicon compound of General Formula (I) in the (S) component include tetramethoxysilane, tetraethoxysilane, tetra-n-propoxysilane, tetraisopropoxysilane, tetra-n-butoxysilane, tetraacetoxysilane, methyltrimethoxysilane, methyltripropoxysilane, methyltributoxysilane, methyltriacetoxysilane, methyltriamylo xysilane, methyltriphenoxysilane, methyltribenzylo xysilane, methyltriphenethyloxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, vinyltrimethoxysilane, vinyltriethoxysilane, vinyltriacetoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyldimethoxysilane, N-(β-aminoethyl)γ-aminopropyltriethoxysilane, N-(β-aminoethyl)γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiaceto xysilane, γ-methacryloxypropylmethyldimethoxysilane, γ-methacryloxypropylmethyldiethoxysilane, γ-mercaptopropylmethyldimethoxysilane, γ-mercaptomethyldiethoxysilane, 3-ureidopropyltriethoxysilane, methylvinyldimethoxysilane, and methylvinyldiethoxysilane. These compounds can be used singly or in combination of two or more of them.

The hydrolyzed compound of the organic silicon compound of General Formula (I) in the (S) component to be used in the coating composition of the present invention is a compound in which a part or all of R²s are substituted with hydrogen atoms by hydrolyzing the organic silicon compound of General Formula (I). These hydrolyzed compounds of the organic silicon compound of General Formula (I) can be used singly or in combination of two or more of them. The hydrolysis can be carried out by adding an acidic aqueous solution such as a hydrochloric acid aqueous solution, a sulfuric acid aqueous solution, and an acetic acid aqueous solution into the organic silicon compound and stirring the resultant mixture.

Examples of the organic silicon compound of General Formula (II):

[(R⁴)_{c}Si(OX)_{3-c}]₂Y (II)

in the (S) component to be used for the coating composition of the present invention include methylenebis(methyldimethoxysilane), ethylenebis(ethyldimethoxysilane), propylenebis(ethyldiethoxysilane), and butylenebis(methyldiethoxysilane). These compounds can be used singly or in combination of two or more of them.

The hydrolyzed compound of the organic silicon compound of General Formula (II) in the (S) component to be used in the coating composition of the present invention is a compound in which a part or all of Xs are substituted with hydrogen atoms by hydrolyzing the organic silicon compound of General Formula (II). These hydrolyzed compounds of the organic silicon compound of General Formula (II) can be used singly or in combination of two or more of them. The hydrolysis can be carried out by adding an acidic aqueous solution such as a hydrochloric acid aqueous solution, a sulfuric acid aqueous solution, and an acetic acid aqueous solution into the organic silicon compound and stirring the resultant mixture.

The (S) component to be used for the coating composition of the present invention is at least one silicon-containing substance selected from the group consisting of the organic silicon compounds of General Formula (I) and General Formula (II) and the hydrolyzed compound thereof.

The (S) component to be used for the coating composition of the present invention is preferably at least one silicon-containing substance selected from the group consisting of the organic silicon compound of General Formula (I) and the hydrolyzed compound thereof. In particular, the organic silicon compound of General Formula (I) or the hydrolyzed compound thereof satisfying conditions where either one of R¹ or R³ is an organic group having an epoxy group, R² is an alkyl group, each of a and b is 0 or 1, and a + b is 1 or 2 is preferable.

Preferable examples of the organic silicon compound of General Formula (I) include glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, glycidoxymethylmetyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, and γ-glycidoxypropylvinyldiethoxysilane. Further preferable examples include γ-glycidoxypropyltrimethoxysilane, γ-glycidoxypropylmethyldimethoxysilane, and γ-glycidoxypropylmethyldiethoxysilane. These compounds can be used singly or as a mixture.

With γ-glycidoxypropyltrimethoxysilane, γ-glycidoxypropylmethyldimethoxysilane, and γ-glycidoxypropylmethyldiethoxysilane, a tetrafunctional compound corresponding to a + b = 0 in General Formula (I) can be further used together. Examples of the compound corresponding to the tetrafunctional compound include tetramethoxysilane, tetraethoxysilane, tetraisopropoxysilane, tetra-n-propoxysilane, tetra-n-butoxysilane, tetra-tert-butoxysilane, and tetra-sec-butoxysilane.

The (T) component to be used in the coating composition of the present invention is colloidal particles (D) formed by bonding an organic silicon compound having a ureido group to surfaces of modified metal oxide colloidal particles (C) having a primary particle diameter of 3 nm to 100 nm. The modified metal oxide colloidal particles (C) are formed by providing metal oxide colloidal particles (A) having a primary particle diameter of 2 nm to 60 nm as nucleuses and partially or fully coating the surfaces of the colloidal particles (A) with a coating material (B) made of acidic oxide colloidal particles having a primary particle diameter of 1 nm to 4 nm. The (T) component is preferably used in the form of the modified metal oxide sol in an amount of 2% by mass to 50% by mass as the metal oxide component.

In the present invention, the primary particle diameter can be measured by transmission electron microscopic observation.

The metal oxide colloidal particles (A) can be produced by known methods such as an ion exchange method, a peptization method, a hydrolysis method, and reaction method. Examples of the ion exchange method include a method for treating the acidic metal salt with a hydrogen-type ion exchange resin and a method for treating the basic metal salt with a hydroxy group-type ion exchange resin. Examples of the peptization method include a method for washing a gel to be obtained by neutralizing the acidic metal salt with a base or neutralizing the basic metal salt with an acid and thereafter peptizing the washed gel with an acid or a base. Examples of the hydrolysis method include a method for hydrolyzing the metal alkoxyide and a method for hydrolyzing the metal basic salt under heating and thereafter removing unnecessary acids. Examples of the reaction method include a method for reacting the metal powder with an acid.

The metal oxide colloidal particles (A) are at least one metal oxide selected from the group consisting of Ti, Fe, Cu, Zn, Y, Zr, Nb, Mo, In, Sn, Sb, Ta, W, Pb, Bi, and Ce. The metal oxide colloidal particles (A) are an oxide of a metal having a valence of 2 to 6 and examples of the forms of these metal oxides include TiO₂, Fe₂O₃, CuO, ZnO, Y₂O₃, ZrO₂, Nb₂O₅, MoO₃, In₂O₃, SnO₂, Sb₂O₅, Ta₂O₅, WO₃, PbO, and Bᵢ₂O₃. These metal oxides can be used singly or used in combination. Examples of the method of the combination include a method for mixing several metal oxides, a method for complexing the metal oxide, and a method for forming a solid solution of the metal oxide at an atomic level.

Examples of the colloidal particles include SnO₂-WO₃ complex colloidal particles formed by complexing SnO₂ particles and WO₃ particles forming chemical bonds at the interfaces thereof, SnO₂-ZrO₂ complex colloidal particles formed by complexing SnO₂ particles and ZrO₂ particles forming chemical bonds at the interfaces thereof, and TiO₂-ZrO₂-SnO₂ complex colloidal particles obtained by forming a solid solution of TiO₂, ZrO₂, and SnO₂ in an atomic level.

The metal oxide colloidal particles (A) can also be used as a compound formed by combing metal components. Examples of the compound include ZnSb₂O₆, InSbO₄, and ZnSnO₃.

In the present invention, as the (T) component, particles (C) obtained by providing the metal oxide colloidal particles (A) as nucleuses and partially or fully coating surfaces of the colloidal particles (A) with a coating material (B) made of acidic oxide colloidal particles having a primary particle diameter of 1 nm to 4 nm are obtained, and an organic silicon compound having a ureido group is bonded to the surfaces of the particles (C) to obtain the colloidal particles (D).

The acidic oxide to be used for the coating material (B) is colloidal particles of at least one metal oxide selected from the group consisting of Si, Sn, Mo, Sb, and W. In the form of the metal oxide, examples of the coating material (B) include SiO₂, SnO₂, MoO₃, Sb₂O₅, and WO₃. These metal oxides can be used singly or used in combination. Examples of the method of the combination include a method for mixing several metal oxides, a method for complexing the metal oxide, and a method for forming a solid solution of the metal oxide at an atomic level.

Examples of the colloidal particles include SnO₂-WO₃ complex colloidal particles formed by complexing SnO₂ particles and WO₃ particles forming chemical bonds at the interfaces thereof, SnO₂-SiO₂ complex colloidal particles formed by complexing SnO₂ particles and SiO₂ particles forming chemical bonds at the interfaces thereof, SnO₂-WO₃-SiO₂ complex colloidal particles formed by complexing SnO₂ particles, WO₃ particles, and SiO₂ particles forming chemical bonds at the interfaces thereof, SnO₂-MoO₃-SiO₂ complex colloidal particles formed by complexing SnO₂ particles, MoO₃ particles, and SiO₂ particles forming chemical bonds at the interfaces thereof, and Sb₂O₅-SiO₂ complex colloidal particles formed by complexing Sb₂O₅ particles and SiO₂ particles forming chemical bonds at the interfaces thereof.

The coating material (B) can be produced by known methods such as an ion exchange method and an oxidation method. Examples of the ion exchange method include a method for treating the acidic metal salt with a hydrogen-type ion exchange resin. Examples of the oxidation method include a method for reacting a powder of a metal or metal oxide with hydrogen peroxide.

Examples of methods for producing the modified metal oxide colloidal particles (C) as the constituent of the (T) component include a first method and a second method described below. The first method is a method for mixing the aqueous sol containing the metal oxide colloidal particles (A) as nucleuses and the coating material (B) in a mass ratio of (B)/(A) of 0.05 to 0.5 in terms of the metal oxides and thereafter heating the aqueous medium thereof. For example, a modified metal oxide sol formed of particles (C) partially or fully coating the surfaces of the colloidal particles (A) as the nucleuses with alkali component-containing antimony pentoxide colloidal particles is obtained by mixing an aqueous sol containing the metal oxide colloidal particles (A) and a sol containing Sb₂O₅-SiO₂ complex colloidal particles in a mass ratio of Sb₂O₅/SiO₂ of 0.1 to 5 containing an alkyl amine as an alkali component, and heating the aqueous medium.

The second method includes a method for mixing the aqueous sol containing metal oxide colloidal particles (A) as nucleuses and a water-soluble stannic oxide alkali salt and silicon oxide alkali salt as the coating material (B) in a mass ratio of SnO₂/SiO₂ of 0.1 to 5 in terms of the metal oxides thereof and thereafter carrying out cation exchange. As the aqueous solution of the water-soluble alkali salt to be used in the second method, the aqueous solution of a sodium salt is preferably used. For example, a sol of modified metal oxide colloidal particles (C) made by partially or fully coating the colloidal particles (A) of the metal oxide with the coating material (B) made of SnO₂-SiO₂ complex colloidal particles is obtained by mixing an aqueous sol containing the colloidal particles (A) of the metal oxide and the SnO₂-SiO₂ complex colloidal particles as the coating material (B) in a mass ratio of (SnO₂-SiO₂)/(A) of 0.05 to 0.5, and heating the resultant mixture at 70°C to 200°C. The SnO₂-SiO₂ complex colloidal particles are obtained by mixing aqueous solutions of sodium stannate and sodium silicate, and carrying out the cation exchange.

The colloidal particles (A) of the metal oxide and the coating material (B) can be mixed at a temperature of 0°C to 100°C and preferably a room temperature to 60°C. After the mixing, the resultant mixture is preferably heated at 70°C to 300°C.

The sol of the modified metal oxide colloidal particles (C) to be used in the (T) component can contain other optional components, as long as the objects of the present invention are achieved. In particular, a colloid having further improved performance such as dispersibility is obtained by adding oxycarboxylic acids in an amount of about 30% by mass or less relative to the total amount of the entire metal oxides. Examples of the oxycarboxylic acids to be used include lactic acid, tartaric acid, citric acid, gluconic acid, malic acid, and glycol.

The sol of the modified metal oxide colloidal particles (C) to be used in the (T) component can contain an alkali component. Examples of the alkali component include hydroxides of alkali metals such as Li, Na, K, Rb, and Cs, ammonia, alkyl amines such as ethylamine, triethylamine, isopropylamine, and n-propylamine, aralkyl amines such as benzylamine, alicyclic amines such as piperidine, and alkanolamines such as monoethanolamine and triethanolamine. Two or more of these alkali components can be mixed and added. These alkali components can be added in an amount of about 30% by mass or less relative to the total amount of the entire metal oxide. These alkali components can be used together with the oxycarboxylic acids.

The modified metal oxide sol can be further concentrated up to 50% by mass as the maximum concentration by common methods such as an evaporation method and a ultrafiltration method. The pH of the sol can be adjusted by adding the alkali metals, the organic bases (amines), and the oxycarboxylic acids to the sol after the concentration. The sol having a total concentration of the metal oxides of 10% by mass to 40% by mass is practically preferable.

When the sol of the modified metal oxide colloidal particles (C) is an aqueous sol, an organosol can be obtained by replacing the water medium of the aqueous sol with a hydrophilic organic solvent. This replacement can be carried out by usual methods such as an evaporation method and an ultrafiltration method. Examples of the hydrophilic organic solvent include lower alcohols such as methyl alcohol, ethyl alcohol, and isopropyl alcohol, linear amides such as dimethyl formamide and N,N'-dimethylacetamide, cyclic amides such as N-methyl-2-pyrrolidone,and glycols such as ethyl cellosolve and ethylene glycol.

The (T) component to be used in the present invention can be obtained by bonding the organic silicon compound having a ureido group to the surface of the modified metal oxide colloidal particles (C).

The coating composition of the present invention contains the colloidal particles (D) formed by bonding an organic silicon compound having a ureido group to surfaces of the modified metal oxide colloidal particles (C) having a primary particle diameter of 3 nm to 100 nm. The modified metal oxide colloidal particles (C) are formed by providing the metal oxide colloidal particles (A) having a primary particle diameter of 2 nm to 60 nm with respect to 100 parts by mass of the organic silicon compound as nucleuses and partially or fully coating surfaces of the colloidal particles (A) with a coating material (B) made of acidic oxide colloidal particles having a primary particle diameter of 1 nm to 4 nm.

Specific examples of the organic silicon compound having a ureido group to be bonded to the surfaces of the modified metal oxide colloidal particles (C) to be used in the coating composition of the present invention include ureidomethyltrimethoxysilane, ureidoethyltrimethoxysilane, ureidopropyltrimethoxysilane, ureidomethyltriethoxysilane, ureidoethyltriethoxysilane, and ureidopropyltriethoxysilane.

The amount of the organic silicon compound having a ureido group to be bonded to the surfaces of the modified metal oxide colloidal particles (C) is preferably 3% by mass to 30% by mass and more preferably 5% by mass to 20% by mass relative to the total metal oxide in the modified metal oxide colloidal particles (C).

The colloidal particles (D) can be obtained by adding a predetermined amount of the organic silicon compound having a ureido group to the sol of the modified metal oxide colloidal particles (C), hydrolyzing the organic silicon compound having a ureido group using a catalyst such as diluted hydrochloric acid, and bonding the resultant hydrolyzed compound to the modified metal oxide colloidal particles (C).

The coating composition of the present invention includes the (S) component and the (T) component. The content ratio of the (T) component is preferably 1% by mass to 70% by mass and the content ratio of the (S) component is preferably 30% by mass to 99% by mass. When the (T) component in the coating composition is less than 1% by mass, the refractive index of the cured film is low, whereby the application range to a substrate is extremely limited. When the (T) component in the coating composition is more than 70% by mass, cracks tend to be generated between the cured film and the substrate, resulting in high possibility of deterioration in transparency.

The coating composition of the present invention may contain a curing catalyst in order to promote a curing reaction. Examples of the curing catalyst include amines such as allylamine and ethylamine, organic acids or inorganic acids such as organic carboxylic acids, chromic acid, hypochlorous acid, boric acid, perchloric acid, bromine acid, selenious acid, thiosulfuric acid, orthosilicic acid, thiocyanic acid, nitrous acid, aluminic acid, and carbonic acid or metal salts thereof, alkoxides of aluminum, zirconium or titanium, and metal chelate compounds such as aluminum acetylacetonate.

In order to adjust a refractive index to the refractive index of the lens serving as the substrate, various fine particle metal oxides can be contained. Examples of the fine particle metal oxides include fine particles of aluminum oxide, titanium oxide, antimony pentoxide, zirconium oxide, silicon dioxide, and cerium oxide having a primary particle diameter of 2 nm to 60 nm.

In order to improve wettability to the substrate and to improve the smoothness of the cured film, various surfactants can be added. An ultraviolet absorber, an antioxidant, and other additives may also be added as long as these additives do not affect the physical properties of the cured film.

The coating composition of the present invention can also contain a thiol compound having two or more mercapto groups in a molecule of the thiol. Specific examples of the thiol compound include 1,2-ethanedithiol, bismuthiol, 3,6-dioxa-1,8-octanediol, thiocyanuric acid, 1,4-bis(3-mercaptobutyryloxy)butane, 1,3,5-tris(3-mercaptobutyryloxyethyl)-1,3,5-triazine-2,4,6(1H,3H,5H)-trione, pentaerythritol tetrakis(3-mercaptobutyrate), trimethylolpropane tris(3-mercaptobutyrate), and trimethylolethane tris(3-mercapto butyrate).

The coating composition of the present invention can be applied onto a substrate to form a cured film. By using a transparent substrate suitable for optical applications, an optical substrate having the cured film further can be obtained.

The coating composition can be cured by hot air drying or active energy ray irradiation. As the curing conditions of the hot air drying, the composition is preferably cured in hot air of 70°C to 200°C and particularly preferably 90°C to 150°C. Examples of the active energy rays include infrared rays, ultraviolet rays, and electron beams. In particular, far-infrared rays can reduce thermal damage caused by heat.

As methods for applying the coating composition of the present invention to the substrate, methods to be usually used such as a dip coating method, a spin coating method, and a spraying coating method can be applied. Among them, the dip coating method and the spin coating method are particularly preferable from the viewpoint of an area density.

Using chemical treatment by acids, alkalis, various organic solvents, or detergents or physical treatment by plasma, ultraviolet light, or the like before applying the coating composition to the substrate, adhesion between the substrate and the cured film can be improved. By applying primer treatment using various resins, adhesion between the substrate and the cured film can be further improved.

The cured film to be formed of the coating composition of the present invention can be used for a reflection coating as a high refractive index film. The cured film can also be used as a multi-functional film by adding functional components such as an anti-fogging agent, a photochromic agent, and an anti-fouling agent.

The optical member having the cured film to be formed of the coating composition of the present invention can be used for a camera lens, automobile window glass, an optical filter attached to a liquid crystal display and a plasma display, and the like, in addition to the spectacle lenses.

The optical member of the present invention has the cured film to be formed of the coating composition of the present invention on the surface of the optical substrate and an anti-reflective coating formed of the deposited film of an inorganic oxide can be formed on the cured film. The anti-reflective coating is not particularly limited and conventionally known single-layer or multi-layer deposited films of inorganic oxides can be used. Examples of the anti-reflective coating include anti-reflective coatings described in Japanese Patent Application Publication No. H2-262104 (JP H2-262104 A) and Japanese Patent Application Publication No. S56-116003 (JP S56-116003 A).

### Example

Hereinafter, Examples of the present invention will be described. The present invention, however, is not limited to Examples. A method for measuring physical properties will be described below.
- Moisture content: Determined by Karl Fischer titration method.
- Particle diameter: Determined as the primary particle diameter by drying a sol on a copper mesh, observing the resultant substance by a transmission electron microscope, and measuring particle diameters of 100 particles, and averaging the measured values.
- Specific gravity: Determined by a float balance method (20°C).
- Viscosity: Determined by Ostwald viscometer (20°C).

### [Production Example 1]

200 g of the methanol sol of titanium oxide-zirconium oxide-stannic oxide complex colloidal particles modified with stannic oxide-silicon dioxide complex colloid obtained by a method similar to Production Example 5 described in Japanese Patent Application Publication No. 2012-31353 (JP 2012-31353 A) was collected in a 500-ML recovery flask. To the methanol sol, 4.8 g of a methanol solution of ureidopropyltriethoxysilane (concentration 50% by mass, manufactured by Shin-Etsu Chemical Co., Ltd., KBE585) was added with stirring and the resultant mixture was reacted for 5 hours under reflux. By this procedure, 209 g of a methanol sol was obtained in which ureidopropyltriethoxysilane was bonded to the surfaces of titanium oxide-zirconium oxide-stannic oxide complex colloidal particles fully coated with the stannic oxide-silicon dioxide complex colloid using the titanium oxide-zirconium oxide-stannic oxide complex colloidal particles as nucleuses. The obtained sol had a specific gravity of 1.076, a viscosity of 2.0 mPa·s, a total metal oxide concentration of 30.5% by mass, a moisture content of 0.9% by mass, and a primary particle diameter observed by a transmission electron microscope of 9 nm.

### [Production Example 2]

200 g of the methanol sol of modified zirconium oxide-stannic oxide complex colloidal particles to which diisobutylamine was bonded, which was obtained by a method similar to Example 1 described in Re-publication WO 11/090084 Pamphlet was collected in a 500-ML recovery flask. To the methanol sol, 6.2 g of a methanol solution of ureidopropyltriethoxysilane (concentration 50% by mass, manufactured by Shin-Etsu Chemical Co., Ltd., KBE585) was added with stirring and the resultant mixture was reacted for 5 hours under reflux. By this procedure, 209 g of a methanol sol was obtained in which ureidopropyltriethoxysilane was bonded the surfaces of zirconium oxide-stannic oxide complex colloidal particles fully coated with silicon dioxide-stannic oxide complex colloid using the zirconium oxide-stannic oxide complex colloidal particles as nucleuses. The obtained sol had a specific gravity of 1.074, a viscosity of 2.4 mPa·s, a total metal oxide concentration of 30.3% by mass, a moisture content of 1.0% by mass, and a primary particle diameter observed by a transmission electron microscope of 12 nm.

### [Example 1]

Into a glass container containing a magnetic stirrer, 55.8 parts by mass of γ-glycidoxypropyltrimethoxysilane was poured and 19.5 parts by mass of 0.01 N hydrochloric acid was added dropwise with stirring for 3 hours. After completion of the dropwise addition, the resultant mixture was stirred for 0.5 hours to obtain a partially hydrolyzed product of γ-glycidoxypropyltrimethoxysilane. 75.3 parts by mass of the partially hydrolyzed product of γ-glycidoxypropyltrimethoxysilane was mixed with 151.0 parts by mass of the methanol sol (150 g, containing 30.0% by mass in terms of total metal oxides), 65 parts by mass of butyl cellosolve, and further 0.9 parts by mass of aluminum acetylacetonate as a curing agent. The methanol sol was obtained in which ureidopropyltriethoxysilane was bonded to the surfaces of the titanium oxide-zirconium oxide-stannic oxide complex colloidal particles fully coated with the stannic oxide-silicon dioxide complex colloid using the titanium oxide-zirconium oxide-stannic oxide complex colloidal particles obtained in Production Example 1 as nucleuses. Then, the resultant mixture was sufficiently stirred to produce a coating liquid for hard coating.

### (Formation of cured film)

A urethane-based plastic lens (refractive index n_{D} = 1.60) was prepared and the coating liquid for hard coating was applied by a dip coating method (film thickness of 3 µm). The applied coating liquid was treated by heating at 120°C for 2 hours to cure the coating film. The evaluation result was listed in Table 1.

### [Example 2]

Into a glass container containing a magnetic stirrer, 55.8 parts by mass of γ-glycidoxypropyltrimethoxysilane was poured and 19.5 parts by mass of 0.01 N hydrochloric acid was added dropwise with stirring for 3 hours. After completion of the dropwise addition, the resultant mixture was stirred for 0.5 hours to obtain a partially hydrolyzed product of γ-glycidoxypropyltrimethoxysilane. 75.3 parts by mass of the partially hydrolyzed product of γ-glycidoxypropyltrimethoxysilane was mixed with 151.0 parts by mass of the methanol sol (150 g, containing 30.0% by mass in terms of total metal oxides), 65 parts by mass of butyl cellosolve, and further 0.9 parts by mass of aluminum acetylacetonate as a curing agent. The methanol sol was obtained in which ureidopropyltriethoxysilane was bonded to the surfaces of the zirconium oxide-stannic oxide complex colloidal particles fully coated with the silicon dioxide-stannic oxide complex colloid using the zirconium oxide-stannic oxide complex colloidal particles obtained in Production Example 2 as nucleuses. Then, the resultant mixture was sufficiently stirred to produce a coating liquid for hard coating.

### (Formation of cured film)

A urethane-based plastic lens (refractive index n_{D} = 1.60) was prepared and the coating liquid for hard coating was applied by a dip coating method (film thickness of 3 µm). The applied coating liquid was treated by heating at 120°C for 2 hours to cure the coating film. The evaluation result was listed in Table 1.

### [Comparative Example 1]

A cured film was formed in a similar manner to Example 1 except that the methanol sol of the titanium oxide-zirconium oxide-stannic oxide complex colloidal particles modified with stannic oxide-silicon dioxide complex colloid obtained by a method similar to Production Example 5 described in Japanese Patent Application Publication No. 2012-31353 (JP 2012-31353 A) was used without modification.

### [Comparative Example 2]

A cured film was formed in a similar manner to Example 1 except that the methanol sol of the modified zirconium oxide-stannic oxide complex colloidal particles to which diisobutylamine was bonded, which was obtained by a method similar to Example 1 described in Re-publication WO 11/090084 Pamphlet was used without modification.

### [Comparative example 3]

Into a glass container containing a magnetic stirrer, 27.9 parts by mass of γ-glycidoxypropyltrimethoxysilane and 27.9 parts by mass of ureidopropyltriethoxysilane were poured and 19.5 parts by mass of 0.01 N hydrochloric acid was added dropwise with stirring for 3 hours. After completion of the dropwise addition, the resultant mixture was stirred for 0.5 hours to obtain a partially hydrolyzed product of γ-glycidoxypropyltrimethoxysilane and ureidopropyltriethoxysilane. 75.3 parts by mass of the partially hydrolyzed product of γ-glycidoxypropyltrimethoxysilane was mixed with 151.0 parts by mass of the methanol sol (150 g, containing 30.0% by mass in terms of total metal oxides), 65 parts by mass of butyl cellosolve, and further 0.9 parts by mass of aluminum acetylacetonate as a curing agent. The methanol sol was obtained in which the titanium oxide-zirconium oxide-stannic oxide complex colloidal particles were modified with the stannic oxide-silicon dioxide complex colloid using the titanium oxide-zirconium oxide-stannic oxide complex colloidal particles used in Production Example 1 as nucleuses. Then, the resultant mixture was sufficiently stirred to produce a coating liquid for hard coating.

### (Formation of cured film)

A urethane-based plastic lens (refractive index n_{D} = 1.60) was prepared and the coating liquid for hard coating was applied by a dip coating method (film thickness 3 µm). The applied coating liquid was treated by heating at 120°C for 2 hours to cure the coating film. The evaluation result was listed in Table 1.

### [Comparative Example 4]

Into a glass container containing a magnetic stirrer, 41.9 parts by mass of γ-glycidoxypropyltrimethoxysilane and 13.9 parts by mass of ureidopropyltriethoxysilane were poured and 19.5 parts by mass of 0.01 N hydrochloric acid was added dropwise with stirring for 3 hours. After completion of the dropwise addition, the resultant mixture was stirred for 0.5 hours to obtain a partially hydrolyzed product of γ-glycidoxypropyltrimethoxysilane and ureidopropyltriethoxysilane. 75.3 parts by mass of the partially hydrolyzed product of γ-glycidoxypropyltrimethoxysilane was mixed with 151.0 parts by mass of the methanol sol (150 g, containing 30.0% by mass in terms of total metal oxides), 65 parts by mass of butyl cellosolve, and further 0.9 parts by mass of aluminum acetylacetonate as a curing agent. The methanol sol was obtained in which the zirconium oxide-stannic oxide complex colloidal particles were modified with the silicon dioxide-stannic oxide complex colloid using the zirconium oxide-stannic oxide complex colloidal particles used in Production Example 2 as nucleuses. Then, the resultant mixture was sufficiently stirred to produce a coating liquid for hard coating.

### (Formation of cured film)

A urethane-based plastic lens (refractive index n_{D} = 1.60) was prepared and the coating liquid for hard coating was applied by a dip coating method. The applied coating liquid was treated by heating at 120°C for 2 hours to cure the coating film. The evaluation result was listed in Table 1.

The physical properties of the optical members having the cured films obtained in Examples and Comparative Examples were evaluated by test methods described below.

### (1) Scratch resistance test

The surface of the cured film was scratched with #0000 steel wool to determine the scratching resistance by visual observation. The criteria are as follows:
A: No scratch was observed.
B: Several scratches were observed.
C: Significant scratches were observed.

### (2) Surface dyeing affinity test

In a 500-mL beaker, 300 g of pure water and 0.6 g of BPI BLACK manufactured by Brain Power Inc. (USA) were weighed, and the resultant mixture was heated to 80°C. The hard-coated lens was immersed into this mixture for 30 minutes, and the total light transmittance was measured. The dyeing concentration was evaluated as the following criteria:
A: Dyeing concentration: 40% or more
B: Dyeing concentration: 20% to less than 40%
C: Dyeing concentration: less than 20%

### (3) Adhesion test

The crosscut of 100 pieces was formed in the cured film at a 1-mm interval. A pressure-sensitive adhesive tape (cellophane tape, manufactured by Nichiban Co., Ltd.) was strongly attached to the crosscut part and thereafter the attached pressure-sensitive adhesive tape was rapidly peeled. The presence or absence of the peeling of the cured film after peeling the pressure-sensitive adhesive tape was checked. The criteria are as follows:
A: No peeling exists.
B: Peeling of 1 piece to 30 pieces in 100 pieces is observed.
C: Peeling of 31 pieces to 60 pieces in 100 pieces is observed.
D: Peeling of 61 pieces to 90 pieces in 100 pieces is observed.
E: Peeling of 91 pieces or more in 100 pieces is observed.

### (4) Adhesion test after weather resistance test

After the cured film was irradiated by a xenon weather meter (irradiation intensity 40 mW/m²) for 100 hours, the crosscut of the resultant cured film was formed, and a test similar to (2) Adhesion test was carried out. The presence or absence of the peeling of the cured film after peeling the pressure-sensitive adhesive tape was checked. As criteria, the criteria of (2) Adhesion test was used.

### (5) Transparency test

In a dark room, the presence or the absence of the haze of the cured film was visually checked under fluorescent light. The criteria are as follows:
A: Almost no haze
B: Haze in the degree of not causing problems as the transparent cured film
C: Whitening significantly occurs.

### [Table 1]

**Table 1**

| | Example 1 | Example 2 | Comparative Example 1 | Comparative Example 2 | Comparative Example 3 | Comparative Example 4 |
|---|---|---|---|---|---|---|
| Scratch resistance | A | A | A | A | C | B |
| Surface dyeing affinity | A | A | A | B | C | C |
| Adhesion | A | A | A | A | A | A |
| Adhesion after weather resistance test | A | A | D | D | B | C |
| Transparency | A | A | A | A | A | A |

Examples 1 and 2 of the present invention have excellent scratch resistance, surface dyeing affinities, adhesion, adhesion after the weather resistance test, transparency, and weather resistance after outdoor exposure. In contrast, Comparative Examples 1 and 2 have extremely low adhesion after the weather resistance test because the organic silicon compound having a ureido group is not bonded to the surfaces of the particles. In Comparative Examples 3 and 4, the organic silicon compound having a ureido group is not bonded to the surfaces of the particles, and used as the (S) component. In Comparative Examples 3 and 4, performance deterioration was found in which the scratch resistance and the surface dyeing affinity of the cured film were reduced, and the adhesion after weather resistance test was also low.

### INDUSTRIAL APPLICABILITY

The optical member having the cured film formed of the coating composition of the present invention can be used for a camera lens, automobile window glass, an optical filter attached to a liquid crystal display and a plasma display, and the like, in addition to the spectacle lenses.

## Claims

1. A coating composition comprising:
an (S) component and a (T) component, wherein
the (S) component is at least one silicon-containing substance selected from the group consisting of organic silicon compounds of General Formula (I):
(R¹)ₐ(R³)_{b}Si(OR²)_{4-(a+b)} (I)
where each of R¹ and R³ is a C₁₋₁₀ alkyl group, aryl group, halogenated alkyl group, halogenated aryl group, or alkenyl group, or an organic group having an epoxy group, an acryloyl group, a methacryloyl group, a mercapto group, a ureido group, an amino group, or a cyano group and is bonded to a silicon atom through a Si-C bond; each of R² is a C₁₋₈ alkyl group, alkoxyalkyl group, or acyl group; and each of a and b is an integer of 0, 1, or 2; and a + b is an integer of 0, 1, or 2; and General Formula (II):
[(R⁴)_{c}Si(OX)_{3-c}]₂Y (II)
where R⁴ is a C₁₋₅ alkyl group, each X is a C₁₋₄ alkyl group or acyl group; Y is a methylene group or a C₂₋₂₀ alkylene group; and c is an integer of 0 or 1 and a hydrolyzed compound of the organic silicon compounds;
the (T) component is colloidal particles (D) formed by bonding an organic silicon compound having a ureido group to surfaces of modified metal oxide colloidal particles (C) having a primary particle diameter of 3 nm to 100 nm formed by providing metal oxide colloidal particles (A) having a primary particle diameter of 2 nm to 60 nm as nucleuses and partially or fully coating the surfaces of the colloidal particles (A) with a coating material (B) made of acidic oxide colloidal particles having a primary particle diameter of 1 nm to 4 nm;
the metal oxide colloidal particles (A) are at least one metal oxide selected from the group consisting of Ti, Fe, Cu, Zn, Y, Zr, Nb, Mo, In, Sn, Sb, Ta, W, Pb, Bi, and Ce; and
the coating material (B) is colloidal particles of at least one metal oxide selected from the group consisting of Si, Sn, Mo, Sb, and W.

2. The coating composition according to claim 1, wherein the organic silicon compound having a ureido group bonded to the surfaces of the modified metal oxide colloidal particles (C) exists in an amount of 3% by mass to 30% by mass to the total metal oxide in the modified metal oxide colloidal particles (C).

3. The coating composition according to claim 1 or claim 2, further comprising at least one curing catalyst selected from the group consisting of a metal salt, a metal alkoxide, and a metal chelate compound.

4. The coating composition according to any one of claims 1 to 3, comprising at least a thiol compound having two or more mercapto groups in a molecule of the thiol compound.

5. An optical member comprising: a cured film formed of the coating composition as claimed in any one of claims 1 to 4 on a surface of an optical substrate.

6. The optical member according to claim 5, further comprising: an anti-reflective coating further formed on the surface of the optical member.

## Patentansprüche

1. Beschichtungszusammensetzung, umfassend:
eine (S)-Komponente und eine (T)-Komponente, wobei
die (S)-Komponente zumindest eine siliciumhaltige Substanz ist, ausgewählt aus der Gruppe bestehend aus organischen Siliciumverbindungen der allgemeinen Formel (I) :
(R¹)ₐ(R³)_{b}Si(OR²)_{4-(a+b)} (I)
worin jedes von R¹ und R³ eine C₁₋₁₀-Alkylgruppe, Arylgruppe, halogenierte Alkylgruppe, halogenierte Arylgruppe oder Alkenylgruppe oder eine organische Gruppe, die eine Epoxygruppe aufweist, eine Acryloylgruppe, eine Methacryloylgruppe, eine Mercaptogruppe, eine Ureidogruppe, eine Aminogruppe oder eine Cyanogruppe ist und durch eine Si-C-Bindung an ein Siliciumatom gebunden ist; jedes R² eine C₁₋₈-Alkylgruppe, Alkoxyalkylgruppe oder Acylgruppe ist; jedes von a und b eine ganze Zahl von 0, 1 oder 2 ist und a + b eine ganze Zahl von 0, 1 oder 2 ist;
und der allgemeinen Formel (II):
[(R⁴)_{c}Si(OX)_{3-c}]₂Y (II)
worin R⁴ eine C₁₋₅-Alkylgruppe ist, jedes X eine C₁₋₄-Alkylgruppe oder Acylgruppe ist; Y eine Methylengruppe oder eine C₂₋₂₀-Alkylengruppe ist und c eine ganze Zahl von 0 oder 1 ist, und eine hydrolysierte Verbindung der organischen Siliciumverbindungen;
die (T)-Komponente kolloidale Partikel (D) sind, gebildet durch Binden einer organischen Siliciumverbindung, die eine Ureidogruppe aufweist, an Oberflächen von modifizierten kolloidalen Metalloxidpartikeln (C) mit einem primären Partikeldurchmesser von 3 bis 100 nm, gebildet durch Bereitstellen kolloidaler Metalloxidpartikel (A) mit einem primären Partikeldurchmesser von 2 bis 60 nm als Kerne und teilweises oder vollständiges Beschichten der Oberfläche der kolloidalen Partikel (A) mit einem Beschichtungsmaterial (B), das aus sauren kolloidalen Oxidpartikeln mit einem primären Partikeldurchmesser von 1 bis 4 nm hergestellt ist;
die kolloidalen Metalloxidpartikel (A) zumindest ein Metalloxid , ausgewählt aus der Gruppe bestehend aus Ti, Fe, Cu, Zn, Y, Zr, Nb, Mo, In, Sn, Sb, Ta, W, Pb, Bi und Ce, sind; und
das Beschichtungsmaterial (B) kolloidale Partikel von zumindest einem Metalloxid, ausgewählt aus der Gruppe bestehend aus Si, Sn, Mo, Sb und W, sind.

2. Beschichtungszusammensetzung gemäss Anspruch 1, wobei die organische Siliciumverbindung mit einer Ureidogruppe, die an die Oberflächen der modifizierten kolloidalen Metalloxidpartikel (C) gebunden ist, in einer Menge von 3 bis 30 Masse-% des gesamten Metalloxids in den modifizierten kolloidalen Metalloxidpartikeln (C) vorliegt.

3. Beschichtungszusammensetzung gemäss Anspruch 1 oder Anspruch 2, die ferner zumindest einen Härtungskatalysator, ausgewählt aus der Gruppe bestehend aus einem Metallsalz, einem Metallalkoxid und einer Metallchelatverbindung, umfasst.

4. Beschichtungszusammensetzung gemäss irgendeinem der Ansprüche 1 bis 3, die zumindest eine Thiolverbindung mit zwei oder mehr Mercaptogruppen in einem Molekül der Thiolverbindung umfasst.

5. Optisches Element, das einen gehärteten Film umfasst, der aus der Beschichtungszusammensetzung gemäss irgendeinem der Ansprüche 1 bis 4 auf einer Oberfläche des optischen Substrats gebildet ist.

6. Optisches Element gemäss Anspruch 5, das ferner eine Antireflexbeschichtung, die ferner auf der Oberfläche des optischen Elements gebildet ist, umfasst.

## Revendications

1. Composition de revêtement comprenant :
un composant (S) et un composant (T), dans lequel
le composant (S) est au moins une substance contenant du silicium choisie dans
le groupe constitué par les composés organiques du silicium de formule générale (I) :
(R¹)ₐ(R³)_{b}Si(OR²)_{4-(a+b)} (I)
où chaque R¹ et R³ est un groupe alkyle en C₁₋₁₀, un groupe aryle, un groupe alkyle
halogéné, un groupe aryle halogéné, ou un groupe alcényle, ou un groupe organique ayant un groupe époxy, un groupe acryloyle, un groupe méthacryloyle, un groupe mercapto, un groupe uréido, un groupe amino ou un groupe cyano et est lié à un atome de silicium par une liaison Si-C ; chaque R² est un groupe alkyle en C₁₋₈, un groupe alcoxyalkyle, ou un groupe acyle ; et chaque a et b est un nombre entier de 0, 1 ou 2 ; a + b est un entier de 0, 1 ou 2 ; et de formule générale (II) :
[(R⁴)_{c}Si(OX)_{3-c}]₂Y (II)
où R⁴ est un groupe alkyle en C₁₋₅, chaque X est un groupe alkyle en C₁₋₄ ou un groupe acyle; Y est un groupe méthylène ou un groupe alkylène en C₂₋₂₀; et c est un nombre entier de 0 ou 1 et un composé hydrolysé des composés organiques du silicium ;
le composant (T) est constitué de particules colloïdales (D) formées par liaison d'un composé de silicium organique ayant un groupe uréido à des surfaces des particules colloïdales d'oxyde métallique modifiées (C) ayant un diamètre de particule primaire de 3 nm à 100 nm formé en fournissant des particules colloïdales d'oxyde métallique (A) ayant un diamètre de particule primaire de 2 nm à 60 nm en tant que noyau et recouvrant partiellement ou totalement les surfaces des particules colloïdales (A) avec un matériau de revêtement (B) constitué de particules colloïdales d'oxyde acide ayant un diamètre de particule primaire de 1 nm à 4 nm ;
les particules colloïdales d'oxyde métallique (A) sont au moins d'un oxyde métallique choisi dans le groupe consistant en Ti, Fe, Cu, Zn, Y, Zr, Nb, Mo, In, Sn, Sb, Ta, W, Pb, Bi, et Ce ; et
le matériau de revêtement (B) représente des particules colloïdales d'au moins un oxyde métallique choisi dans le groupe consistant en Si, Sn, Mo, Sb, et W.

2. Composition de revêtement selon la revendication 1, dans laquelle le composé de silicium organique ayant un groupe uréido lié aux surfaces des particules colloïdales d'oxyde métallique modifiées (C) existe en une quantité de 3 % en masse à 30 % en masse par rapport à l'oxyde métallique total dans les particules colloïdales d'oxyde métallique modifiées (C).

3. Composition de revêtement selon la revendication 1 ou la revendication 2, comprenant en outre au moins un catalyseur de durcissement choisi dans le groupe consistant en un sel métallique, un alcoolate métallique et un composé chélaté métallique.

4. Composition de revêtement selon l'une quelconque des revendications 1 à 3, comprenant au moins un composé thiol ayant deux ou plusieurs groupes mercapto dans une molécule du composé thiol.

5. Élément optique comprenant: un film durci formé de la composition de revêtement selon l'une quelconque des revendications 1 à 4 sur une surface d'un substrat optique.

6. Élément optique selon la revendication 5 comprenant en outre : un revêtement anti-réfléchissant formé en outre sur la surface de l'élément optique.
